# EUROPÄISCHE PATENTSCHRIFT

(11) **EP 1 068 896 B1**
(45) Veröffentlichungstag und Bekanntmachung des Hinweises auf die Patenterteilung: **12.12.2001**
(21) Anmeldenummer: 00111604.5
(22) Anmeldetag: 31.05.2000
(51) Int. Cl.: B01J 25/00, B01J 25/02

(54) **Festbettkatalysatoren vom Raney-Typ**
Fixed bed Raney catalysts
Catalysateurs en lit fixe de type Raney

(30) Priorität: 07.07.1999 DE 19931316
(43) Veröffentlichungstag der Anmeldung: 17.01.2001
(73) Patentinhaber: Degussa AG, 40474 Düsseldorf (DE)
(72) Erfinder: Ostgard, Daniel, Dr., 63801 Kleinostheim (DE); Freund, Andreas, Dr., 10606-2228 White Plains, NY, (US); Rehren, Claus, Dr., 63739 Aschaffenburg (DE); Berweiler, Monika, 63477 Maintal (DE); Stephani, Günther, Dr., 01454 Grosserkmannsdorf (DE)

(56) Entgegenhaltungen:
- EP-A- 0 648 534
- EP-A- 0 880 996
- DE-A- 4 446 907
- DE-A- 19 640 554

## Beschreibung

Vorliegende Erfindung betrifft Festbettkatalysatoren vom Raney-Typ.

Aktivierte Metallkatalysatoren sind auf dem Gebiet der chemischen Technik als Raney-Katalysatoren bekannt. Sie werden, weitgehend in Pulverform, für eine große Anzahl von Umsetzungen organischer Verbindungen wie Hydrierung, Dehydrierung, Isomerisierung, reduktive Alkylierung, reduktive Aminierung und Hydratisierung verwendet. Diese pulverförmigen Katalysatoren werden aus einer Legierung eines katalytisch aktiven Metalls, im vorliegenden auch als ein Katalysatormetall bezeichnet, mit einer weiteren Legierungskomponente, die in Alkalien löslich ist, hergestellt. Als Katalysatormetalle werden hauptsächlich Nickel, Kobalt, Kupfer oder Eisen benutzt. Aluminium wird in der Regel als die Legierungskomponente verwendet, welche in Alkalien löslich ist, jedoch können auch andere Komponenten verwendet werden, insbesondere Zink und Silicium oder Gemische derselben mit Aluminium.

Diese sogenannten Raney-Legierungen werden in der Regel nach dem Blockgießverfahren hergestellt. Bei diesem Verfahren werden ein Gemisch des Katalysatormetalls und beispielsweise Aluminium zuerst geschmolzen und in Blöcke gegossen. Typische Legierungsansätze im Produktionsmaßstab betragen etwa 10 bis 100 kg pro Block. Gemäß DE 21 59 736 wurden Kühlzeiten von bis zu 2 Stunden erhalten. Dies entspricht einer mittleren Abkühlungsgeschwindigkeit von etwa 0,2/Sekunde. Im Gegensatz hierzu werden in Verfahren, bei denen ein schnelles Kühlen angewandt wird (z. Bsp. bei einem Zerstäubungsverfahren) Raten von 102 bis 106 K/Sek. erreicht. Die Abkühlungsrate wird insbesondere durch die Teilchengröße und das Kühlmedium beeinflusst (vgl. Materialwissenschaft und -technologie (Herausg. R. W. Chan, P. Haasen, E. J. Kramer, Bd. 15, Verarbeitung von Metallan und Legierungen, 1991, VCH-Verlag Weinheim, Seiten 57 bis 110). Ein Verfahren dieser Art wird in EP 0 437 788 B1 angewandt, um eine pulverförmige Raney-Legierung herzustellen. Bei diesem Verfahren wird die geschmolzene Legierung bei einer Temperatur von 50 bis 500°C oberhalb ihres Schmelzpunkts zerstäubt und unter Verwendung von Wasser und/oder eines Gases abgekühlt.

Zur Herstellung eines Katalysators wird die Raney-Legierung zuerst fein gemahlen, wenn sie während ihrer Herstellung nicht in der gewünschten Pulverform anfiel. Sodann wird das Aluminium völlig oder teilweise durch Extraktion mit Alkalien, wie z. Bsp. einer Lösung von kaustischem Soda, durch Extraktion entfernt. Hierbei wird das Legierungspulver aktiviert. Nach Extraktion des Aluminiums besitzt das Legierungspulver eine hohe spezifische Oberfläche (BET-Wert) von 20 bis 100 m2/g und ist reich an aktivem Wasserstoff. Das aktivierte Katalysatorpulver ist pyrophor und wird unter Wasser oder organischen Lösungsmitteln gelagert oder ist in organische Verbindungen, welche bei Raumtemperatur fest sind, eingebettet.

Pulverisierte Katalysatoren besitzen den Nachteil, dass sie lediglich in einem diskontinuierlichen Verfahren verwendet werden können und nach der katalystischen Reaktion aus dem Reaktionsmedium durch kostspielige Sedimentation und/oder Filtration abgetrennt werden müssen. Infolgedessen wurden die verschiedensten Verfahren zur Herstellung von Formkörpern offenbart, welche zu aktivierten metallischen Festbettkatalysatoren nach Extraktion des Aluminiums führen. Demgemäß sind z. Bsp. grobteilchenförmige Raney-Legierungen, d.h. Raney-Legierungen, die lediglich grob vermahlen wurden, erhältlich und können durch eine Behandlung mit einer Lösung von kaustischem Soda aktiviert werden. Die Extraktion und Aktivierung verläuft dann nur in einer Oberflächenschicht, deren Dicke durch die während der Extraktion angewandten Bedingungen eingestellt werden kann.

Ein wesentlicher Nachteil von nach diesen Verfahren des Stands der Technik hergestellten Katalysatoren ist die geringe mechanische Stabilität der aktivierten Außenschicht. Da lediglich diese Außenschicht der Katalysatoren katalytisch aktiv ist, führt ein Abrieb zur schnellen Desaktivierung, und eine neuerliche Aktivierung tieferliegender Schichten der Legierung unter Verwendung einer Lösung von kaustischem Soda führt sodann bestenfalls zu einer teilweisen Reaktivierung.

Das Dokument DE-A 44 46 907 beschreibt Formkörper, die in Form von Tabletten oder Strängen vorliegen. Diese Formkörper werden unter Verwendung von Extrudern, Tabletten- oder Strangpressen hergestellt, indem man zunächst aus einer pulverförmigen Legierung aus Aluminium und eines Übergangmetalles und einem Hilfsmittel wie Polyvinylalkohol und Wasser oder Stearinsäure eine Knetmasse herstellt und diese Knetmasse verformt, trocknet und anschließend calciniert.

Das Dokument EP 0 880 996 A1 beschreibt einen geformten Festbettkatalysator nach Raney, der hergestellt wird, indem man ein Pulver aus der Katalysatorlegierung mit einem hochmolekulierbaren Polymer vermischt, die Mischung verformt und anschließend kalziniert.

Das Dokument DE-A 44 46 907 beschreibt Formkörper, die in Form von Tabletten oder Strängen vorliegen. Diese Formkörper werden unter Verwendung von Extrudern, Tabletten- oder Strangpressen hergestellt, indem man zunächst aus einer pulverförmigen Legierung aus Aluminium und eines Übergangmetalles und einem Hilfsmittel wie Polyvinylalkohol und Wasser oder Stearinsäure eine Knetmasse herstellt und diese Knetmasse verformt, trocknet und anschließend calciniert.

Das Dokument EP 0 880 996 A1 beschreibt einen geformten Festbeltkatalysator nach Raney, der hergestellt wird, indem man ein Pulver aus der Katalysatorlegierung mit einem hochmolekulierbaren Polymer vermischt, die Mischung verformt und anschließend kalziniert.

Die Patentanmeldung EP 0 648 534 B1 beschreibt geformte, aktivierte Raney-Metallfestbettkatalysatoren und deren Herstellung. Hierbei sollen die zuvor beschriebenen Nachteile vermieden werden, wie z. Bsp. die schlechte mechanische Stabilität, die von der Aktivierung einer Außenschicht herrührt. Um diese Katalysatoren herzustellen, werden ein Gemisch von Pulvern einer Katalysatorlegierung und eines Bindemittels benutzt, wobei die Katalysatorlegierungen jeweils zumindest ein katalytisch aktives Katalysatormetall und eine extrahierbare Legierungskomponente enthalten. Die reinen Katalysatormetalle oder deren Gemische, welche keine extrahierbaren Komponenten enthalten, werden als Bindemittel verwendet. Die Verwendung des Bindemittels in einer Menge von 0,5 bis 20 Gew.% bezüglich der Katalysatorlegierung ist wesentlich, um nach der Aktivierung eine ausreichende mechanische Stabilität zu erreichen. Nach Formgebung der Katalysatorlegierung und des Bindemittels mit herkömmlichen Formgebungshilfen und Porenbildnern, werden die erhaltenen, frisch hergestellten Formkörper bei Temperaturen unterhalb 850°C kalziniert. Als Ergbnis von Sintervorgängen in dem fein verteilten Bindelmittel führt dies zu festen Verbindungen zwischen den einzelnen Granalien der Katalysatorlegierung. Diese Verbindungen sind im Gegensatz zu Katalysatorlegierungen nicht oder lediglich in einem geringen Ausmaß extrahierbar, so dass eine mechanisch stabile Struktur auch nach der Aktivierung erhalten wird. Jedoch besitzt das zugesetzte Bindemittel den Nachteil, dass es im wesentlichen katalytisch inaktiv ist, womit die Anzahl von aktiven Zentren in der aktivierten Schicht vermindert ist. Zusätzlich bedeutet die absolut wesentliche Verwendung eines Bindemittels, dass nur ein beschränkter Mengenbereich von Porenbildnern angewandt werden kann, ohne die Festigkeit des Formkörpers zu gefährden. Aus diesem Grund kann die Schüttdichte dieser Katalysatoren nicht auf einen Wert von weniger als 1,9 kg pro Liter herabgesetzt werden, ohne dass ein Festigkeitsverlust auftritt. Dies führt zu einem beträchtlichen wirtschaftlichen Nachteil, wenn man diese Katalysatoren in industriellen Verfahren benutzt. Insbesondere führt bei der Verwendung von kostspieligeren Katalysatorlegierungen, wie z. Bsp. Kobaltlegierungen, die hohe Schüttdichte zu einer hohen Investition pro Reaktorbett, obgleich dies teilweise durch die hohe Aktivität und Langzeitstabilität dieser Katalysatoren ausgeglichen wird. In bestimmten Fällen erfordert die hohe Schüttdichte des Katalysators auch eine mechanisch verstärkte Reaktorbauart.

Ein Ziel vorliegender Erfindung ist infolgedessen die Bereitstellung von Katalysatoren mit aktiviertem Basismetall aus metallischen Fasern und Flocken, bei denen die Nachteile bekannter Festbettkatalysatoren weitgehend vermieden werden.

Das Ziel der Erfindung sind Festbettkatalysatoren vom Raney-Typ, die sich dadurch auszeichnen, dass sie aus Metalllegierungsfasern und/oder -flocken hergestellt sind, die zuvor nach dem Tiegelmetallextraktionsverfahren gefertigt und sodann tablettiert, in Matten verpresst und/oder in eine Kartusche abgefüllt wurden.

Ein weiteres Ziel vorliegender Erfindung ist ein Verfahren zur Herstellung der Festbettkatalysatoren vom Raney-Typ, die sich dadurch auszeichnen, dass Metalllegierungsfasern und/oder -flocken nach dem Tiegelschmelzextraktionsverfahren hergestellt und danach tablettiert, in Matten verpresst und/oder in eine Kartusche abgefüllt werden.

Bei einer bevorzugten Ausführungsform der Erfindung können die Festbettkatalysatoren vom Raney-Typ aktiviert werden.

Die zuvor genannten und weitere Ziele der Erfindung werden erreicht, indem man Fasern oder Flocken aus den gewünschten Metallen und/oder Legierungen nach dem Tiegelschmelzextraktionsverfahren herstellt und zur Herstellung des Katalysators jegliche notwendigen Aktivierungsverfahren durchführt. Die Hauptvorteile dieser Erfindung sind, dass sich die Fasern und Flocken schnell abkühlen, so dass sich die erwünschten kleinen Phasenbereiche in diesen Raney-Legierungen bilden, und diese Materialien sind im Gegensatz zu Pulvern aus dem Reaktionsgemisch leichter abzutrennen. Sie können entweder in eine Kartuschenanordnung abgefüllt werden, um ihre katalytische Reaktion zu leisten, oder sie können in Matten, Tabletten oder andere üblicherweise angewandte Formen verpresst werden, welche als Festbettkatalysatoren ohne weiteres brauchbar sind.

Bei einer bevorzugten Ausführungsform werden die für vorliegendes Patent hergestellten Fasern und Flocken gemäß DE 197 11 764 A1 nach dem Tiegelschmelzextraktionsverfahen hergestellt. Bei diesem Verfahren liegt ein rechteckiger Tiegel mit geschmolzener Legierung unterhalb eines wassergekühlten Kupferspinnrads, das mit speziell ausgebildeten Kerben an seiner Oberfläche ausgestattet ist. Der Tiegel wird sodann langsam hochgehoben, so dass das Spinnrad gerade noch in Berührung kommt. Auf diese Weise streicht das Rad die geschmolzene Legierung ab, während das geschmolzene Material sich in der mit Kerben versehenen Oberfläche des Rads ansammelt und verfestigt, bevor es schnell in einen Sammelbereich freigegeben wird. Das Ergebnis ist ein schnell abgekühltes Material mit einer regulierbaren Form. Je nach Ausbildung der Kerben am Spinnrad sind das Endmaterial entweder Flocken oder Fasern einer bestimmten Länge und eines bestimmten Durchmessers.

Raney-Katalysatorlegierungen werden typischerweise aus einer Schmelze des Katalysatormetalls und von Aluminium erhalten. Dessen ungeachtet können aus identischen mikroskopischen Zusammensetzungen unterschiedliche Phasenstrukturen erhalten werden, in Abhängigkeit davon, wie und wie schnell sich das geschmolzene Material abkühlt. Eine grobe Phasenstruktur mit großen Phasenbereichen bildet sich in der Regel beim Gießen von Blöcken infolge der geringen Abkühlungsgeschwindigkeit. Eine wesentlich feinere Struktur bildet sich jedoch, wenn ein schnelleres Abkühlungsverfahren angewandt wird. Die erforderliche Abkühlungsgeschwindigkeit kann durch den Fachmann durch geeignete Versuche bestimmt werden. Als eine Leitlinie für erforderliche Abkühlungsgeschwindigkeiten können Kühlzeiten von weniger als 2 Minuten vom Schmelzpunkt auf weniger als 700°C genannt werden. Dies entspricht Kühlgeschwindigkeiten von 5 K/Sek.

Die Schüttdichte des erhaltenen Festbettkatalysators ist für hoch aktive Katalysatoren ebenfalls wichtig. Diese sollte weniger als 2,0 kg/Liter sein. Wenn die Schüttdichte mehr als 2,0 kg/Liter ist, sind die Katalysatoren zu kompakt und infolgedessen weniger aktiv. Das Gewichtsverhältnis des Katalysatormetalls zur extrahierbaren Legierungskomponente in der Katalysatorlegierung liegt, wie bei Raney-Legierungen üblich, im Bereich von 20:80 bis 80:20. Erfindungsgemäße Katalysatoren können auch mit anderen Metallen dotiert sein, um eine Wirkung auf die katalytischen Eigenschaften herbeizuführen. Der Zweck dieser Art Dotierung ist z. Bsp. die Verbesserung der Selektivität bezüglich einer speziellen Umsetzung. Dotierungsmetalle werden häufig auch Promotoren genannt. Das Dotieren oder Behandeln des Raney-Katalysators mit Promotoren wird z. Bsp. im U.S.-Patent 4.153.578 und in DE-AS 21 01 856, in DE-OS 21 00 373 und in der DE-AS 2053799 beschrieben.

Grundsätzlich können jegliche bekannte Metalllegierungen mit extrahierbaren Elementen, wie z. Bsp. Aluminium, Zink und Silicium, für vorliegende Erfindung verwendet werden. Geeignete Promotoren sind Übergangselemente in den Gruppen III B bis VIIB und VIII sowie der Gruppe IB des Periodensystems der Elemente und auch die Seltene Erden-Metalle. Sie werden in einer Menge von bis zu 20 Gew.%, bezogen auf das Gesamtgewicht des Katalysators, verwendet. Vorzugsweise werden als Promotoren Chrom, Mangan, Eisen, Kobalt, Vanadium, Tantal, Titan, Wolfram und/oder Molybdän sowie Metalle der Platingruppe benutzt. Sie werden zweckmäßigerweise als legierungsbildende Bestandteile in die Katalysatorlegierung zugegeben. Zusätzlich können Promotoren mit einer unterschiedlichen extrahierbaren Metalllegierung in Form eines abtrennbaren Metallpulvers benutzt werden, oder die Promotoren können später dem Katalysatormaterial zugesetzt werden. Eine spätere Anwendung von Promotoren kann entweder nach der Kalzinierung oder nach der Aktivierung durchgeführt werden. Eine optimale Einstellung der Katalysatoreigenschaften bei dem besonderen Katalyseverfahren ist deshalb möglich.

Die im vorliegenden hergestellten Katalysatoren vom Raney-Typ wurden entweder in eine Kartusche abgefüllt und mit einer Lösung kaustischen Sodas aktiviert, oder sie wurden in Formen wie Tabletten und Matten verpresst. Das geformte Material wurde wahlweise mit einem Bindemittel, wie z. Bsp. einem Nickelpulver, hergestellt, in Luft kalziniert und mit einer Lösung kaustischen Sodas aktiviert. Zu diesem Zweck können z. Bsp. eine auf 80°C erwärmte 20%ige Lösung kaustischen Sodas benutzt werden.

Die aus der Kalzinierung hervorgehenden Vorläufer der Katalysatoren vom Raney-Typ sind hinsichtlich der Eigenwirtschaftlichkeit der Erfindung ebenfalls sehr wichtig. Sie sind nicht pyrophor und können ohne Schwierigkeit gehandhabt und transportiert werden. Die Aktivierung kann durch den Anwender kurz vor ihrem Gebrauch durchgeführt werden. Eine Lagerung unter Wasser oder organischen Lösungsmitteln, oder das Einbetten in organische Verbindungen ist für die Katalysatorvorläufer nicht erforderlich.

Die Festbettkatalysatoren beim Raney-Typ gemäß vorliegender Erfindung können zur Hydrierung, Dehydratisierung, Isomerisierung, reduktiven Alkylierung, reduktiven Aminierung und/oder Hydratisierung organischer Verbindungen angewandt werden.

### VERGLEICHSBEISPIEL 1

Ein frei fließendes, pellitisierbares Katalysatorgemisch wurde gemäß den Vorschriften in EP 0 648 534 A1 für einen Vergleichskatalysator hergestellt; es bestand aus 1.000 g eines Legierungspulvers aus 53% Ni und 47% Al, 150 g reinem Nickelpulver (?99% Ni, und d50=21 µm) und 25 g Ethylenbisstearoylamid, während etwa 150 g Wasser zugegeben werden. Aus diesem Gemisch wurden Tabletten mit dem Durchmesser von 4 mm und einer Dicke von 4 mm gepresst. Die Formkörper wurden 2 Stunden bei 700°C kalziniert. DieTabletten wurden in einer 20%igen Lösung von kaustischem Soda 2 Stunden bei 80°C nach dem Kalzinieren aktiviert.

### VERGLEICHSBEISPIEL 2

Gemäß den Vorschriften in EP 0 648 534 A1 wurde für einen Vergleichskatalysator, der aus 1.000 g eines Legierungspulvers aus 53% Ni und 47% Al, 150 g reinem Nickelpulver (?99% Ni, und d50=21 µm) sowie 25 g Ethylen-bis-stearoylamid bestand, ein frei fließendes, pelletisierbares Katalysatorgemisch hergestellt, wobei etwa 150 g Wasser zugegeben wurden. Aus diesem Gemisch wurden Tabletten mit dem Durchmesser von 10mm und einer Dicke von 6 mm gepresst. Die Formkörper wurden 2 Stunden bei 700°C kalziniert. Nach dem Kalzinieren wurden die Tabletten in einer 20%igen Lösung kaustischen Sodas 2 Stunden bei 80°C aktiviert.

### BEISPIEL 1

Mit 20 g Fasern 50% Ni: 50% Al (5 mm lang, mit dem Durchmesser von 100 µm) und 1 g Fasern 87% zu 13% Al (mit einer Länge von 5 mm und einem Durchmesser von 30 bis 50 µm) wurde ein Gemisch hergestellt. Aus diesem Gemisch wurden Tabletten des Durchmessers 10 mm und einer Dicke von 6 mm gepresst. Die Formkörper wurden 2 Stunden bei 700°C kalziniert. Die Tabletten wurden nach dem Kalzinieren 1,5 Stunden in einer 20%igen Lösung kaustischen Sodas aktiviert.

### BEISPIEL 2

Mit 20 g Fasern 50% Ni :50% Al (einer Länge von 5 mm und eines Durchmesers von 100 µm) und 2,8 g Nickelpulver (50=21 µm) wurde ein Gemisch hergestellt. Aus diesem Gemisch wurden Tabletten mit einem Durchmesser von 10 mm und einer Dicke von 6 mm gepresst. Die Formkörper wurden 2 Stunden bei 700°C kalziniert. Nach dem Kalzinieren wurden die Tabletten 1,5 Stunden in einer 20%igen Lösung kaustischen Sodas aktiviert.

### BEISPIEL 3

Mit 35 g Fasern 50%Ni:50% Al (mit einer Länge von 5 mm und einem Durchmesser von 100 µm) und 0,89 g Nickelpulver (d50=21 µm) wurde ein Gemisch hergestellt. Aus diesem Gemisch wurden Tabletten mit dem Durchmesser von 4 mm und einer Dicke von 4 mm gepresst. Die Formkörper wurden 2 Stunden bei 700°C kalziniert. Nach dem Kalzinieren wurden die Tabletten 1,5 Stunden in einer 20%igen Lösung kaustischen Sodas bei 80°C aktiviert.

### BEISPIEL 4

Mit 35 g Fasern 50% Ni: 50% Al (mit einer Länge von 5 mm und einem Durchmesser von 100 µm) und 0,89 g Zinkpulver (d50 ? 60 µm) wurde ein Gemisch hergestellt. Aus diesem Gemisch wurden Tabletten mit einem Durchmesser von 4 mm und einer Dicke von 4 mm gepresst. Die Formkörper wurden 2 Stunden bei 700°C kalziniert. Nach dem Kalzinieren wurden die Tabletten in einer 20%igen Lösung kaustischen Sodas 1,5 Stunden bei 80°C aktiviert.

### BEISPIEL 5

Ein Teflonkorb wurde 7 g Fasern 50 Ni: 50% Al (einer Länge von 5 mm und einem Durchmesser von 100 µm) gefüllt und 1,5 Stunden bei 80°C in einer 20%igen Lösung kaustischen Sodas aktiviert.

### Anwendungsbeispiel 1

Die katalytische Wirksamkeit des Katalysators aus den Vergleichsbeispielen 1 und 2 und aus den Beispielen 1 bis 5 wurden während der Hydrierung von Nitrobenzol miteinander verglichen. Zu diesem Zweck wurden 100 g Nitrobenzol und 100 g Ethanol in einen Rührautoklaven mit einem Fassungsvermögen von 0,5 Liter gefüllt, der mit einem Gasrührer ausgestattet war. 10 g des zu untersuchenden Katalysators wurden jedesmal unter Verwendung eines Katalysatorkorbs in dem Rührautoklaven suspendiert, so dass das Katalysatormaterial durch das Gemisch aus Reaktionsteilnehmer und Lösungsmittel sorgfältig gewaschen wurde, und es wurde Wasserstoff eingeleitet. Die Hydrierung wurde bei einem Wasserstoffdruck von 40 bar und einer Temperatur von 150°C durchgeführt. Die Temperatur bei Beginn, und die Rate des Wasserstoffverbrauchs wurden bestimmt. Die Ergebnisse sind in Tabelle 1 angeführt. Zur Überprüfung wurden nach 1,2,3,4, und 5 Stunden Proben entnommen und durch Gaschromatographie analysiert.

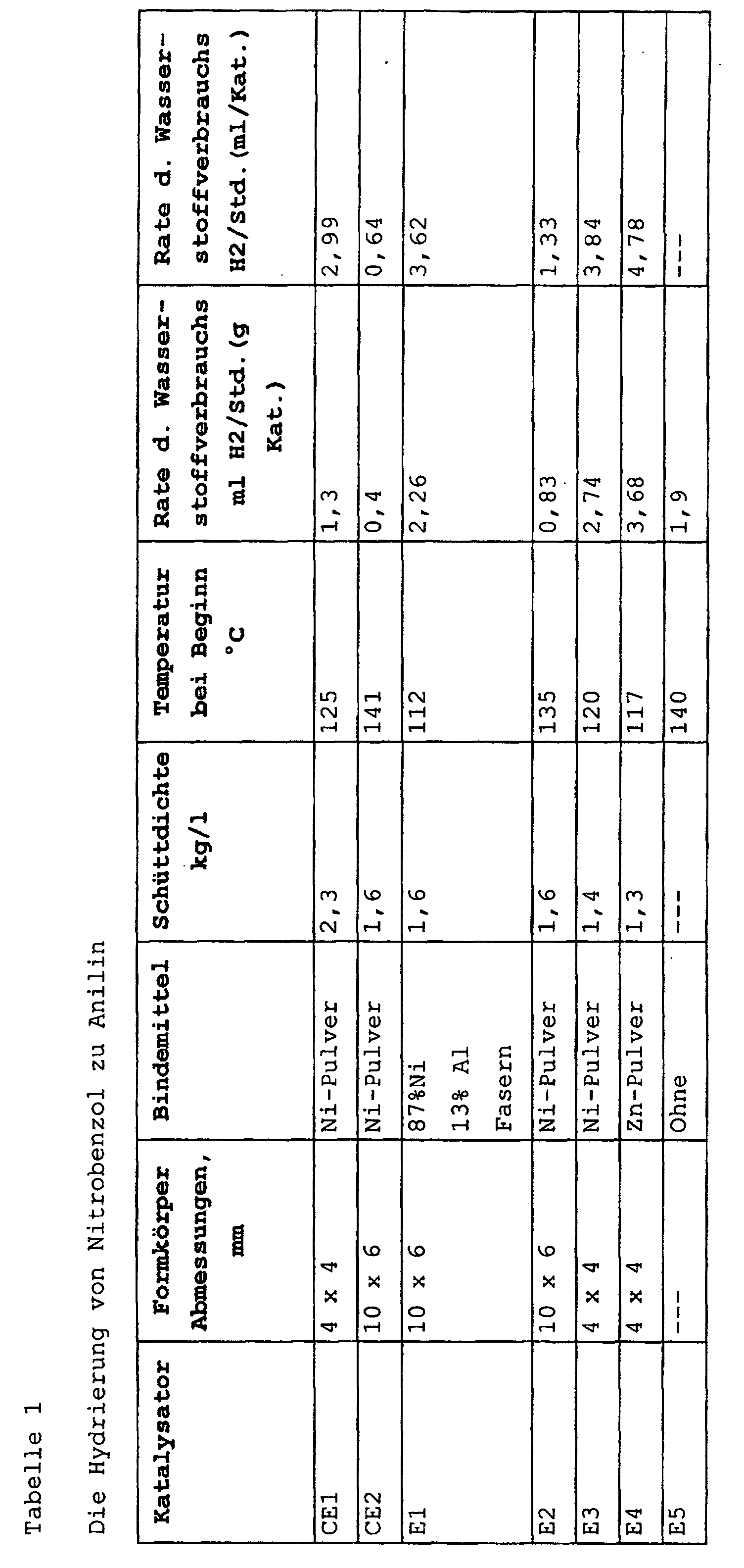

## Patentansprüche

1. Festbettkatalysatoren vom Raney-Typ, **dadurch gekennzeichnet, dass** sie aus Metalllegierungsfasern und/oder -flocken hergestellt sind, welche zuvor gemäß dem Tiegelmetallextraktionsverfahren hergestellt und sodann tablettiert, in Matten verpresst und/oder in eine Kartusche abgefüllt wurden.

2. Verfahren zur Herstellung der Festbettkatalysatoren vom Raney-Typ gemäß Anspruch 1, **dadurch gekennzeichnet, dass** Metalllegierungsfasern und/oder -flocken nach dem Tiegelschmelzextraktionsverfahren hergestellt und sodann tablettiert, in Matten verpresst und/oder in eine Kartusche abgefüllt werden.

3. Verfahren gemäß Anspruch 2, **dadurch gekennzeichnet, dass** die Festbettkatalysatoren vom Raney-Typ aktiviert sind.

4. Verfahren gemäß Anspruch 2, **dadurch gekennzeichnet, dass** die Festbettkatalysatoren vom Raney-Typ mit Übergangselementen der Gruppen IIIB bis VIIB und VIII und der Gruppe IB des Periodensystems der Elemente und auch mit Seltene Erden-Metallen in einer Menge von bis zu 20 Gew.% dotiert werden.

5. Verfahren gemäß Anspruch 4, **dadurch gekennzeichnet, dass** die dotierten Festbettkatalysatoren vom Raney-Typ aktiviert werden.

6. Verwendung der Festbettkatalysatoren vom Raney-Typ gemäß Anspruch 1 zur Hydrierung, Dehydrierung, Isomerisierung, reduktiven Alkylierung, reduktiven Aminierung und/oder Hydratisierung organischer Verbindungen.

## Claims

1. Fixed bed catalysts of the Raney type, **characterised in that** they are produced from metal alloy fibres and/or flakes, which have been previously produced by the crucible metal extraction process and then tableted, pressed into mats and/or packed into a cartridge.

2. Process for the production of the fixed bed catalysts of the Raney type according to claim 1, **characterised in that** metal alloy fibres and/or flakes are produced by the crucible metal extraction process and then tableted, pressed into mats and/or packed into a cartridge.

3. Process according to claim 2, **characterised in that** the fixed bed catalysts of the Raney type are activated.

4. Process according to claim 2, **characterised in that** the fixed bed catalysts of the Raney type are doped with transition elements from groups IIIB to VIIB and VIII and group IB of the periodic system of elements and also with rare earth metals in a quantity of up to 20 wt.%.

5. Process according to claim 4, **characterised in that** the doped fixed bed catalysts of the Raney type are activated.

6. Use of the fixed bed catalysts of the Raney type according to claim 1 for the hydrogenation, dehydrogenation, isomerisation, reductive alkylation, reductive amination and/or hydration of organic compounds.

## Revendications

1. Catalyseurs à lit fixe de type Raney,
**caractérisé en ce qu'**
ils sont fabriqués à partir de fibres et/ou de flocons d'alliages métalliques qui sont tout d'abord produits selon le procédé d'extraction de métal au creuset puis transformés en comprimés, pressés pour obtenir des mats et/ou mis dans une cartouche.

2. Procédé de production des catalyseurs à lit fixe de type Raney selon la revendication 1,
**caractérisé en ce que**
des fibres et/ou flocons d'alliage métallique sont produits selon le procédé d'extraction par fusion au creuset, puis transformés en comprimés, comprimés pour obtenir des mats et/ou mis dans une cartouche.

3. Procédé selon la revendication 2,
**caractérisé en ce que**
les catalyseurs à lit fixe de type Raney sont activés.

4. Procédé selon la revendication 2,
**caractérisé en ce que**
les catalyseurs à lit fixe de type Raney sont additionnés d'éléments de transition des groupes IIIB à VIIB et VIII et du groupe IB de la classification périodique des éléments, ainsi qu'avec des métaux de terre rare en une quantité allant jusqu'à 20 % en poids.

5. Procédé selon la revendication 4,
**caractérisé en ce que**
les catalyseurs à lit fixe dopés de type Raney sont activés.

6. Utilisation de catalyseur à lit fixe de type Raney selon la revendication 1 pour l'hydrogénation, la déshydrogénation, l'isomérisation, l'alkylation réductrice, l'amination réductrice et/ou l'hydratation de composés organiques.
